# EUROPEAN PATENT SPECIFICATION

(11) **EP 3 813 171 B1**
(45) Date of publication and mention of the grant of the patent: **28.02.2024**
(21) Application number: 20193573.1
(22) Date of filing: 31.08.2020
(51) Int. Cl.: H01M 10/04, H01M 50/109, H01M 50/153, H01M 50/169, H01M 50/183, H01M 50/181, H01M 50/188, H01M 50/531, H01M 50/367

(54) **BUTTON BATTERY FOR IMPROVING UTILIZATION RATE OF RADIAL SPACE**
KNOPFBATTERIE ZUR VERBESSERUNG DER NUTZUNGSRATE DES RADIALRAUMS
PILE BOUTON POUR AMÉLIORER LE TAUX D'UTILISATION D'ESPACE RADIAL

(30) Priority: 05.09.2019 CN 201910835204
(43) Date of publication of application: 28.04.2021
(73) Proprietor: Chongqing VDL Electronics Co., Ltd., Chongqing (CN)
(72) Inventor: ZHOU, Xianmao, Chongqing (CN)
(74) Representative: Herrero & Asociados, S.L.

(56) References cited:
- CN-A- 106 159 350
- CN-A- 108 023 037
- CN-A- 108 232 051
- CN-A- 110 048 137
- US-A- 3 982 958
- US-A1- 2005 233 212
- US-A1- 2018 138 467

## Description

### TECHNICAL FIELD

The present disclosure relates to the field of button batteries, and in particular to a button battery improving a radial space utilization.

### BACKGROUND

At present, housings of button batteries on the market are not integrated designs, and a technical problem of poor sealing reliability exists. For example, a button battery disclosed in a Chinese application No. 201920094848.3 includes a cathode housing, an anode housing, and a seal body configured to seal the cathode housing and the anode housing. An R-corner sealing technology of the housing is performed, such that the seal body is compressed with an interference fit to achieve the sealing function between the cathode housing and the anode housing. However, a measurement of the R-angle in the prior art is not accurate, such that a good sealing capability of the battery housing and a quality qualification cannot completely guaranteed. Moreover, in a circumferential direction of the battery, an outer ring of the battery is the cathode housing, and an inner ring is the anode housing. The seal body is not arranged between the cathode housing and the anode housing. This multilayer structure takes up too much space in a radial direction of the battery, and a radial space cannot be fully utilized.

### SUMMARY OF THE DISCLOSURE

The invention is defined in the appended claims. The present disclosure provides a button battery, including a metal housing, a cell arranged in the metal housing, a cover plate arranged on the metal housing,.an injection hole, a film, a cover bowl, and an air layer. The cell includes a cathode and an anode. The cover plate and the metal housing have a same polarity. A cap is arranged at and protruded from an outer surface of the cover plate. An insulating member is arranged between the cover plate and the cap, such that the cover plate and the cap may not be short-circuited. One of the cathode and the anode is electrically connected to the metal housing, and the other of the cathode and the anode is electrically connected to the cap. The injection hole is defined on the cover plate and communicated with an inner space of the metal housing. The film is located on the outer surface of the cover plate for sealing the injection hole. The cover bowl is arranged on the outer surface of the cover plate so that the film is between the cover bowl and the cover plate. The air layer is defined between the cover bowl and the film. When a volume of a gas inside the metal housing is excessively expanded, the gas breaks through the film and the metal housing is communicated with the air layer.

Compared with the prior art, the beneficial effects of the present disclosure are:
The present disclosure includes a metal housing, a cell arranged in the metal housing, and a cover plate arranged on the metal housing. The cell includes a cathode and an anode. The cover plate and the metal housing have a same polarity and are integrated by laser welding to realize a more reliable sealing of the battery housing. A cap is arranged at and protruded from an outer side of the cover plate. An insulating member is arranged between the cover plate and the cap, such that the cover plate and the cap may not be short-circuited. One of the cathode and the anode is electrically connected to the metal housing, and another of the cathode and the anode is electrically connected to the cap. The cell is only separated from an outside by a single-layer metal housing, thereby improving the utilization rate of the radial space of the battery. The technology of the button battery is simpler, such that needs of a fully automated battery production are satisfied, a battery production efficiency is improved, and a yield is well guaranteed. CN106159350A, CN108023037A and CN108232051A disclose similar button cells.

### BRIEF DESCRIPTION OF THE DRAWINGS

To further illustrate technical solutions of embodiments of the present disclosure, drawings needed for description of the embodiments will be briefly introduced. Obviously, the following drawings are only some embodiments of the present disclosure. To any one of skill in the art, other drawings may be obtained without any creative work based on the following drawings.
FIG. 1 is a perspective view of a button battery improving a utilization rate of a radial space according to an embodiment of the present disclosure.
FIG. 2 is an exploded view of a button battery improving a utilization rate of a radial space according to an embodiment of the present disclosure.
FIG. 3 is a front view of a button battery improving a utilization rate of a radial space according to an embodiment of the present disclosure.
FIG. 4 is a cross-sectional view at A-A in FIG. 3.
FIG. 5 is a partially enlarged view at Position I in FIG. 4.
FIG. 6 is an exploded schematic view of a stacked cell structure according to an embodiment of the present disclosure.
FIG. 7 is a first structural schematic view of a wound-type cell according to an embodiment of the present disclosure.
FIG. 8 is a second structural schematic view of a wound-type cell according to an embodiment of the present disclosure.
FIG. 9 is a schematic view of cathode and anode tabs arranged at an end of an end surface of a cell according to an embodiment of the present disclosure.
FIG. 10 is a schematic view of cathode and anode tabs arranged at a middle of an end surface of a cell according to an embodiment of the present disclosure.
FIG. 11 is a perspective view of a cover bowl arranged with a safety vent according to an embodiment of the present disclosure.
FIG. 12 is a perspective view of a cover plate arranged with a safety vent according to an embodiment of the present disclosure.
FIG. 13 is a perspective view of a metal housing arranged with a safety vent on a bottom according to an embodiment of the present disclosure.

### DETAILED DESCRIPTION

In order to make the objectives, technical solutions, and advantages of embodiments in the present disclosure clearer, the technical solutions in the embodiments of the present disclosure will be described clearly and completely with reference to the accompanying drawings. Obviously, the described embodiments are only some embodiments of the present disclosure. To any one of skill in the art, other embodiments may be obtained without any creative work and should be within the scope of the present disclosure.

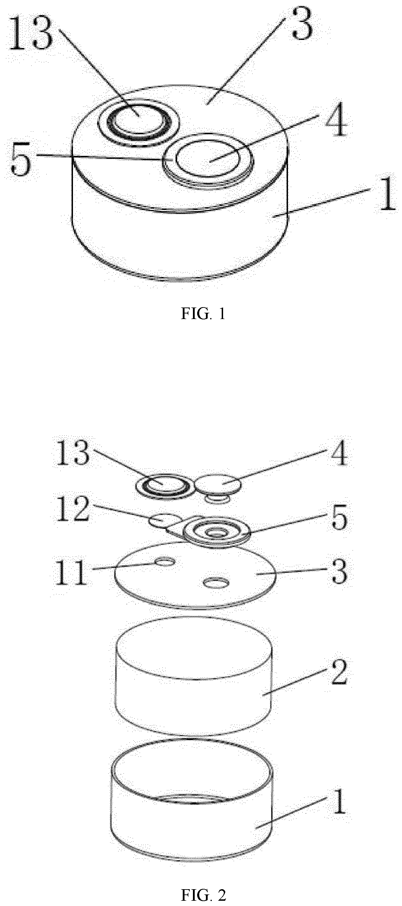

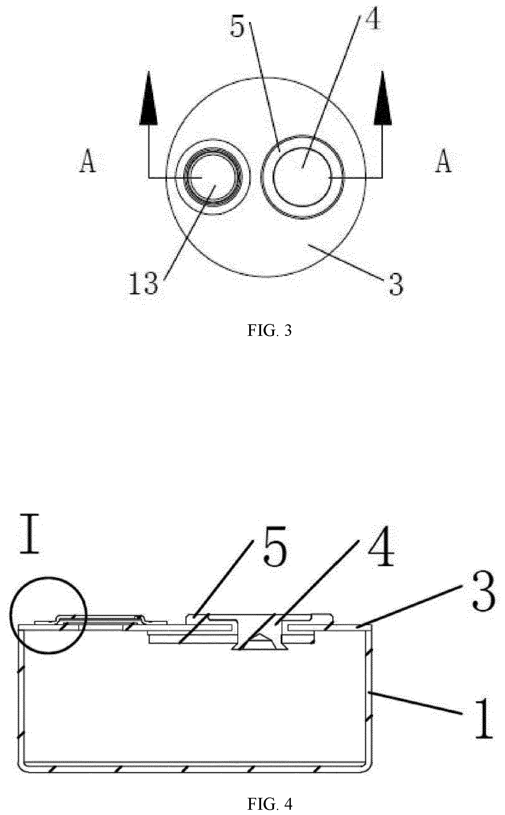

As shown in FIG. 1 to FIG. 5, the present disclosure provides a button battery improving a utilization rate of a radial space. The button battery includes a metal housing 1. The metal housing 1 may have a substantially cylindrical shape with an open upper end. A ratio of a diameter to a height of the metal housing 1 may be greater than 1. The metal housing 1 may be stamped from a nickel-plated deep-drawn metal sheet as a raw material. The metal housing 1 is arranged with a cell 2 including a cathode 21 and an anode 22. The metal housing 1 is also arranged with a cover plate 3. The cover plate 3 is a substantially circular sheet, disposed at the open upper end of the metal housing 1 and welded with the metal housing 1 as a whole. The cover plate 3 and the metal housing 1 may be made of a same material, such that a good sealing after welding is ensured and a leakage of the internal electrolyte is limited. The cover plate 3 may have a same polarity as the metal housing 1. A cap 4 is arranged at and protruded from an outer side of the cover plate 3. A protruding end of the cap 4 may have a substantially cylindrical shape. An insulating member 5 is arranged between the cover plate 3 and the cap 4, such that the cover plate 3 and the cap 4 may not be short-circuited. The insulating member 5 is arranged through an extrusion or an injection molding to realize a sealing between the cover plate 3 and the cap 4. One of the cathode 21 and the anode 22 is electrically connected to the metal housing 1, and another is electrically connected to the cap 4. The cover plate 3 is defined with an injection hole 11 penetrating into the metal housing 1. A safety vent 15 capable of communicating with the injection hole 11 may be arranged on the cover plate 3, such that an electrolyte is injected into the button battery through the safety vent 15. The cover plate 3 may also be arranged with a film 12 configured to seal the injection hole 11, such that the button battery may not leak the electrolyte during an automatic production operation. The electrolyte may be a lithium ion electrolyte with a charging function. A cover bowl 13 is arranged on the cover plate 3 at a same position as the film 12. The cover bowl 13 may be welded to the cover plate 3 through a laser welding. An air layer 14 is defined between the cover bowl 13 and the film 12. When a volume of a gas inside the cell 2 is excessively expanded, the gas may break through the film 12 and communicate with the air layer 14. The air layer 14 is configured to relieve a pressure of the gas inside the button battery, and reduce a risk of an expansion and an explosion of the button battery.

In some embodiments, the safety vent 15 may be a curved scoring with a circular angle in a range of 30° - 360° and with a thickness in a range of 0.02 - 0.06 mm.

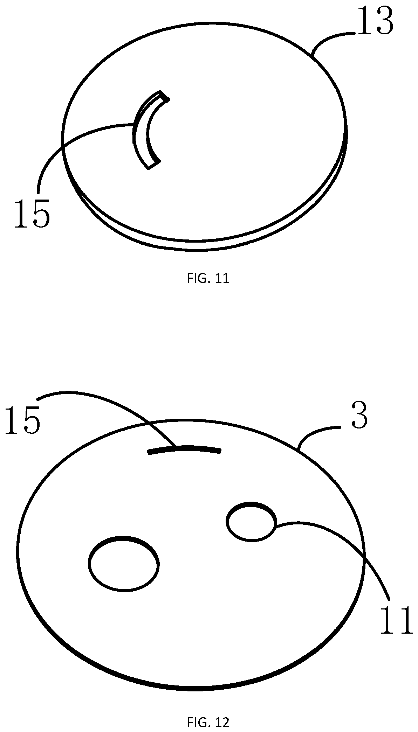

In some embodiments, as shown in FIG. 11, the safety vent 15 may be arranged at an inner surface of the cover bowl 13.

In some embodiments, as shown in FIG. 12, the safety vent 15 may be arranged at an inner surface of the cover plate 3.

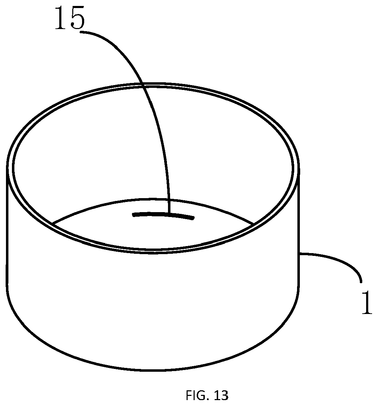

In some embodiments, as shown in FIG. 13, the safety vent 15 may be arranged at an inner surface of a bottom of the metal housing 1.

In some embodiments, the safety vent 15 may be arranged at an outer surface of the cover bowl 13, the cover plate 3, or the bottom of the metal housing 1. Several safety vents 15 may be arranged at one or more surfaces of the cover bowl 13, the cover plate 3, or the bottom of the metal housing 1, which is not limited herein.

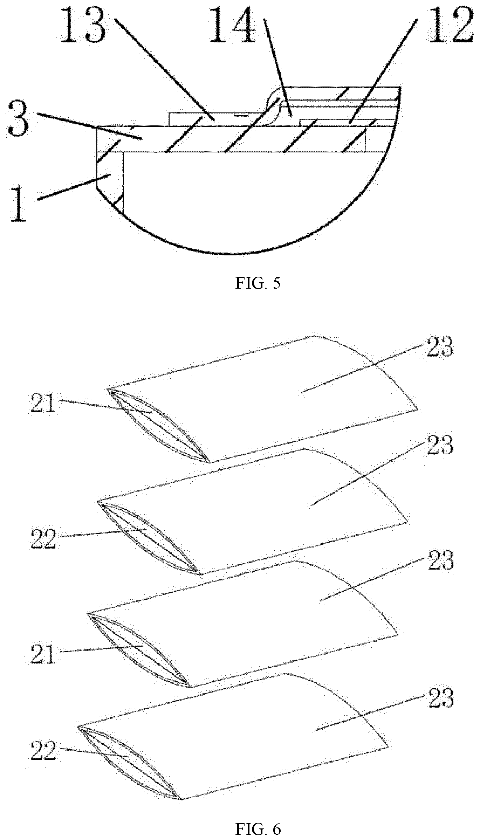

As shown in FIG. 6, the cell 2 may have a stacked structure in which the cathode 21, a separator 23, and the anode 22 are continuously stacked in a sequential order. The cathode 21, the separator 23, and the anode 22 may be square or round. The cathode 21 may be an aluminum sheet, and the anode 22 may be a nickel sheet or a copper sheet. The anode 22 has a function of embedding and removing lithium ions. The separator 23 is a porous plastic sheet with electrical insulation properties but capable of conducting ions. The separator 23 is made into a bag type. One of the cathode 21 and the anode 22 is wrapped in the separator 23. A plurality of the cathodes 21 are connected in parallel to form a positive current collector by welding. A plurality of the anodes 22 are connected in parallel to form a negative current collector by welding.

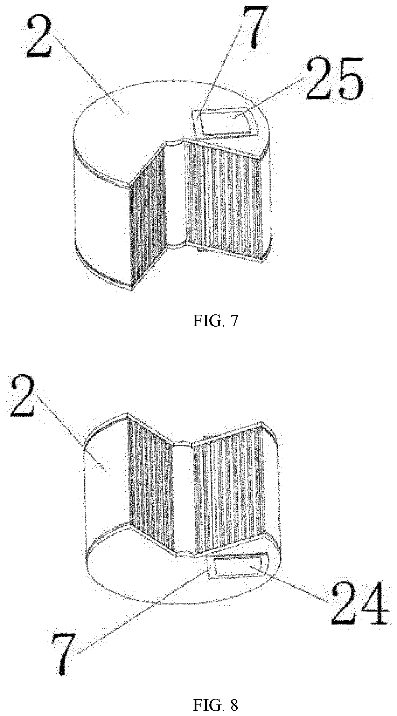

As shown in FIG. 7 and FIG. 8, the cell 2 may also have a winding structure formed by superimposing and winding the cathode 21, the separator 23, and the anode 22. A cathode tab 24 is led out from an end surface of the winding structure. An anode tab 25 is led out from another end surface of the winding structure. The cathode tab 24 and the anode tab 25 are respectively attached to each end surface of the winding structure through an insulating film 7. The cathode tab 24 is electrically connected to the cathode 21. The anode tab 25 is electrically connected to the anode 22. The cathode tab 24 and the anode tab 25 may be both designed with a flat sheet. The flat sheet may have a substantially circular, square or polygonal shape. The cathode tab 24 and the anode tab 25 may be both made of a metal foil having a good conductive property with a thickness of 5 micrometers to 100 micrometers. The insulating film 7 may be a sheet-shaped plastic adhesive film covering a side surface of the cathode tab 24 and the anode tab 25, and adhered to each end surface of the cell 2.

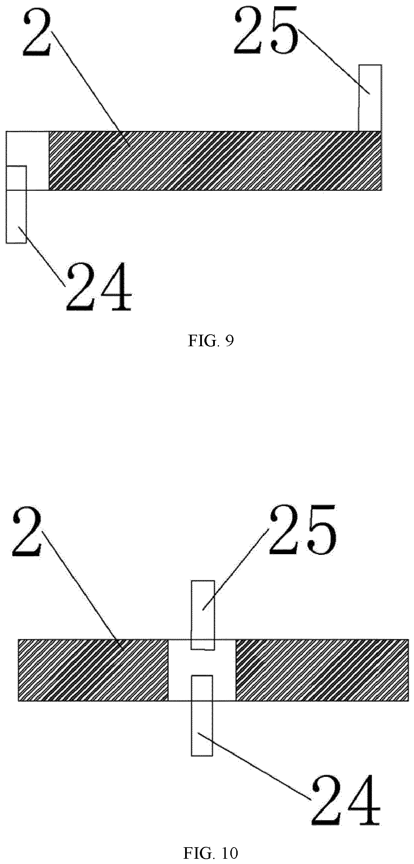

As shown in FIG. 9 and FIG. 10, the cathode tab 24 and the anode tab 25 are respectively disposed at a middle of each end surface of the cell 2, or respectively disposed at a tail of each end surface of the cell 2. The cathode tab 24 and the anode tab 25 disposed at the middle of each end surface of the cell 2 are capable of being bent with an angle of 90° toward a direction of the tail of an end surface of the cell 2 and attaching to a corresponding end surface. The cathode tab 24 and the anode tab 25 disposed at the tail of an end surface of the cell 2 are capable of being bent with an angle of 90° toward a direction of the middle of an end surface of the cell 2 and attaching to a corresponding end surface.

In summary, the present disclosure includes a metal housing 1, a cell 2 arranged in the metal housing 1, and a cover plate 3 arranged on the metal housing 1. The cell 2 includes a cathode 21 and an anode 22. The cover plate 3 and the metal housing 1 have a same polarity and are integrated by laser welding to realize a more reliable sealing of the battery housing. A cap 4 is arranged at and protruded from an outer side of the cover plate 3. An insulating member 5 is arranged along an outer edge of the cap 4 on the cover plate 3, such that the cover plate 3 and the cap 4 may not be short-circuited. One of the cathode 21 and the anode 22 is electrically connected to the metal housing 1 or the cover plate 3, and another of the cathode 21 and the anode 22 is electrically connected to the cap 4. The cell 2 is only separated from an outside by a single-layer metal housing, thereby improving the utilization rate of the radial space of the battery. The technology of the button battery is simpler, such that needs of a fully automated battery production are satisfied, a battery production efficiency is improved, and a yield is well guaranteed.

## Claims

1. A button battery, comprising:
a metal housing (1); and
a cell (2) arranged in the metal housing (1);
wherein the button battery is **characterized in that**:
a cover plate (3) is arranged on the metal housing (1);
the cell (2) comprises a cathode (21) and an anode (22); the cover plate (3) and the metal housing (1) have a same polarity; a cap (4) is arranged at and protruded from an outer surface of the cover plate (3); an insulating member (5) is arranged between the cap (4) and the cover plate (3), such that the cover plate (3) and the cap (4) are not short-circuited; one of the cathode (21) and the anode (22) is electrically connected to the metal housing (1), and the other one of the cathode (21) and the anode (22) is electrically connected to the cap (4);
an injection hole (11) is defined on the cover plate (3) and communicated with an inner space of the metal housing (1); wherein a film (12) is located on the outer surface of the cover plate (3) for sealing the injection hole (11);
a cover bowl (13) is arranged on the outer surface of the cover plate (3) so that the film (12) is between the cover bowl (13) and the cover plate (3), and an air layer (14) is defined between the cover bowl (13) and the film (12); when a volume of a gas inside the metal housing (1) is excessively expanded, the gas breaks through the film (12) and the metal housing (1) is communicated with the air layer (14).

2. The button battery according to claim 1, wherein a safety vent (15) is arranged on the cover plate (3) and communicated with the injection hole (11).

3. The button battery according to claim 2, wherein the safety vent (15) is a curved scoring with a circular angle in a range of about 30° to about 360° and with a thickness in a range of about 0.02 mm to about 0.06 mm.

4. The button battery according to claim 1, wherein the safety vent (15) is arranged at an inner surface of the cover bowl (13), or at an inner surface of the cover plate (3), or at an inner surface of a bottom of the metal housing (1).

5. The button battery according to claim 1, wherein the metal housing (1) has a substantially cylindrical shape with an open end, and the cover plate (3) is disposed at the open end of the metal housing (1) and welded with the metal housing (1).

6. The button battery according to claim 5, wherein a ratio of a diameter of the metal housing (1) to a height of the metal housing (1) is greater than 1.

7. The button battery according to claim 1, wherein the cell (2) comprises a separator (23) configured as a bag; one of the cathode (21) and the anode (22) is wrapped in the separator (23); a plurality of the cathodes (21) are connected in parallel to form a positive current collector; a plurality of the anodes (22) are connected in parallel to form a negative current collector.

8. The button battery according to claim 7, wherein the separator (23) is a porous plastic sheet with electrical insulation properties and capable of conducting ions.

9. The button battery according to claim 7, wherein the cell (2) has a stacked structure in which the cathode (21), the separator (23), and the anode (22) are continuously stacked in a sequential order.

10. The button battery according to claim 7, wherein the cell (2) has a winding structure formed by superimposing and winding the cathode (21), the separator (23), and the anode 22.

11. The button battery according to claim 10, wherein a cathode tab (24) is led out from a first end surface of the winding structure, and an anode tab (25) is led out from a second end surface of the winding structure; the cathode tab (24) and the anode tab (25) are respectively attached to the first end surface or the second end surface of the winding structure correspondingly through an insulating film (7); the cathode tab (24) is electrically connected to the cathode (21), and the anode tab (25) is electrically connected to the anode (22).

12. The button battery according to claim 11, wherein the cathode tab (24) and the anode tab (25) are respectively disposed at a middle of the first end surface or the second end surface of the cell (2) correspondingly, or respectively disposed at a tail of the first end surface or the second end surface of the cell (2) correspondingly.

13. The button battery according to claim 12, wherein the cathode tab (24) and the anode tab (25) respectively disposed at the middle of the first end surface or the second end surface of the cell (2) correspondingly are capable of being bent with an angle of 90° toward a direction of the tail of an end surface of the cell (2) and attaching to a corresponding end surface; the cathode tab (24) and the anode tab (25) disposed at the tail of the first end surface or the second end surface of the cell (2) correspondingly are capable of being bent with an angle of 90° toward a direction of the middle of an end surface of the cell (2) and attaching to a corresponding end surface.

## Patentansprüche

1. Eine Knopfbatterie, die Folgendes umfasst:
Ein Metallgehäuse (1); und
eine im Metallgehäuse angeordnete Zelle (2);
wobei die Knopfbaterrie **dadurch gekennzeichnet ist, dass**:
eine Deckplatte (3) am Metallgehäuse (1) angeordnet ist;
die Zelle (2) eine Kathode (21) und eine Anode (23) umfasst; die Deckplatte (3) und das Metallgehäuse (1) dieselbe Polarität haben; eine Kappe (4) an der Aussenfläche der Deckplatte (3) angeordnet ist und herausragt; ein Isolierglied (5) zwischen der Kappe (4) und der Deckplatte (3) angeordnet ist, so dass die Deckplatte und die Kappe (4) nicht kurzgeschlossen sind; wobei entweder eine Kathode (21) oder eine Anode (22) elektrisch an das Metallgehäuse (1) angeschlossen ist und die andere der beiden, die Kathode (21) oder die Anode (22), elektrisch mit der Kappe (4) verbunden ist;
wobei ein Injektionsloch (11) an der Deckplatte (3) definiert ist und mit einem Innenraum des Metallgehäuses (1) kommuniziert; wobei ein Film (12) an der Aussenfläche der Deckplatte (3) zum Abdichten des Injektionsloches (11) angelegt ist;
wobei eine Deckschale (13) an der Aussenfläche der Deckplatte (3) angeordnet ist, so dass der Film (12) sich zwischen der Deckschale (13) und der Deckplatte (3) befindet und eine Luftschicht (14) zwischen der Deckschale (13) und dem Film (12) definiert ist; wenn ein Gasvolumen innerhalb des Metallgehäuses (1) sich zu sehr ausdehnt, das Gas durch den Film (12) bricht und das Metallgehäuse (1) mit der Luftschicht (14) kommuniziert.

2. Die Knopfbatterie gemäss Anspruch 1, bei der ein Sicherheitsventil (15) an der Deckplatte (3) angeordnet ist und mit dem Injektionsloch (11) in Verbindung steht.

3. Die Knopfbatterie gemäss Anspruch 2, bei der das Sicherheitsventil (15) eine gebogene Einritzung ist mit einem Rundwinkel im Bereich von etwa 30º bis etwa 360º und mit einer Stärke von rund 0,02 mm bis rund 0,06 mm.

4. Die Knopfbatterie gemäss Anspruch 1, bei der das Sicherheitsventil (15) an einer Innenfläche der Deckschale (13) oder an einer Innenfläche der Deckplatte (3) oder an einer Innenfläche eines Bodens des Metallgehäuses (1) angeordnet ist.

5. Die Knopfbatterie gemäss Anspruch 1, bei der das Metallgehäuse (1) ein im Wesentlichen zylindrisches Profil aufweist mit einem offenen Ende, und die Deckplatte (3) am offenen Ende des Metallgehäuses (1) vorgesehen ist und mit dem Metallgehäuse (1) verschweißt ist.

6. Die Knopfbatterie gemäss Aspruch 5, bei der ein Verhältnis eines Durchmessers des Metallgehäuses (1) zu einer Höhe des Metallgehäuses (1) grösser ist als 1.

7. Die Knopfbatterie gemäss Anspruch 1, bei der die Zelle (2) ein Trennstück (23) aufweist, das wie eine Tasche konfiguriert ist; entweder eine der Kathoden (21) oder eine der Anoden (22) im Trennstück (23) eingewickelt ist; eine Vielzahl von den Kathoden (21) ist parallel geschaltet, um einen positiven Stromabmehmer zu bilden; eine Vielzahl von Anoden (22) ist parallel geschaltet, um einen negativen Stromabnehmer zu bilden.

8. Die Knopfbatterie gemäss Anspruch 7, bei der das Trennstück (23) eine poröse Kunststoffplatte ist mit elektrischen Isolierungseigenschaften und der Fähigkeit Ionen zu leiten.

9. Die Knopfbatterie gemäss Anspruch 7, bei der die Zelle eine Stapelstruktur aufweist, in der die Kathode (21), das Trennstück (23) und die Anode (22) kontinuierlich in einer sequentiellen Reihenfolge gestapelt sind.

10. Die Knopfbatterie gemäss Anspruch 7, bei der die Zelle (2) eine Windungsstruktur aufweist, die durch Überlagerung und Winden der Kathode (21), des Trennstücks (23) und der Anode (22) gebildet wird.

11. Die Knopfbatterie gemäss Anspruch 10, bei der ein Kathodenindex (24) ab einer ersten Endfläche der Windungsstruktur nach aussen geführt wird, und ein Anodenindex (25) ab einer zweiten Endfläche der Windungsstruktur nach aussen geführt wird; wobei sowohl der Kathodenindex (24) als auch der Anodenindex (25) entsprechend an der ersten Endfläche oder der zweiten Endfläche der Windungsstruktur mittels eines Isolierungsfilms (7) befestigt sind; der Kathodenindex (24) elektrisch mit der Kathode (21) verbunden und der Anodenindex (25) elektrisch mit der Anode (22) verbunden ist.

12. Die Knopfbatterie gemäss Anspruch 11, bei der der Kathodenindex (24) und der Anodenindex (25) jeweils in der Mitte der ersten Endfläche oder zweiten Endfläche der entsprechenden Zelle (2) angeordnet sind, oder jeweils an einem hinteren Teil der ersten Endfläche oder zweiten Endfläche der Zelle (2) entsprechend angeordnet sind.

13. Die Knopfbatterie gemäss Anspruch 12, bei der der Kathodenindex (24) und Anodenindex (25), die jeweils in der Mitte der ersten Endfläche oder zweiten Endfläche der Zelle (2) angeordnet sind, in einem Winkel von 90º in Richtung des hinteren Teils einer Endfläche der Zelle (2) gebogen werden und an der entsprechenden Endfläche befestigt werden können; der an einem hinteren Teil der ersten Endfläche oder zweiten Endfläche der Zelle (2) angeordnete Kathodenindex (24) und Anodenindex (25) entsprechend in einem Winkel von 90º in Richtung der Mitte einer Endfläche der Zelle (2) gebogen und an einer entsprechenden Endfläche befestigt werden können.

## Revendications

1. Une pile bouton, comprenant ce qui suit:
un boîtier métallique (1) ; et
une cellule (2) disposée dans le boîtier métallique (1) ;
la pile bouton étant **caractérisée en ce que** :
une plaque de recouvrement (3) est disposée sur le boîtier métallique (I) ;
la cellule (2) comprend une cathode (21) et une anode (22) ; la plaque de recouvrement (3) et le boîtier métallique (1) ont la même polarité ; un couvercle (4) est disposé sur une surface extérieure de la plaque de recouvrement (3) et fait saillie à partir de celle-ci ; un élément isolant (5) est disposé entre le couvercle (4) et la plaque de recouvrement (3), de sorte que la plaque de recouvrement (3) et le couvercle (4) ne soient pas en court-circuit ; dans lequel soit une cathode (21) soit une anode (22) est connectée électriquement au boîtier métallique (1), et l'autre, c'est-à-dire la cathode (21) ou l'anode (22), est connectée électriquement au couvercle (4) ;
un trou d'injection (11) est défini sur la plaque de recouvrement (3) et communique avec un espace intérieur du boîtier métallique (1) ; un film (12) est appliqué sur la surface extérieure de la plaque de recouvrement (3) pour sceller le trou d'injection (11) ;
Une coquille de couverture (13) est disposée sur la surface extérieure de la plaque de recouvrement (3) de sorte que le film (12) se trouve entre la coquille de couverture (13) et la plaque de recouvrement (3), et une couche d'air (14) est définie entre la coquille de couverture (13) et le film (12) ; lorsqu'un volume de gaz à l'intérieur du boîtier métallique (1) est excessivement dilaté, le gaz le gaz se brise à travers le film (12) et le boîtier métallique (1) est mis en communication avec la couche d'air (14).

2. La pile bouton selon la revendication 1, dans laquelle une soupape de sécurité (15) est disposé sur la plaque de recouvrement (3) et communique avec le trou d'injection (11).

3. La pile bouton selon la revendication 2, dans laquelle la soupape de sécurité (15) se présente sous la forme d'une rainure incurvée dont l'angle de courbure est compris entre environ 30° et environ 360° et dont l'épaisseur est comprise entre environ 0,02 mm et environ 0,06 mm.

4. La pile bouton selon la revendication 1, dans laquelle la soupape de sécurité (15) est disposé sur une surface intérieure de la coquille de couverture (13), ou sur une surface intérieure de la plaque de recouvrement (3), ou sur une surface intérieure de la face inférieure du boîtier métallique (1).

5. La pile bouton selon la revendication 1, dans laquelle le boîtier métallique (1) a une forme sensiblement cylindrique avec une extrémité ouverte, et la plaque de recouvrement (3) est disposée à l'extrémité ouverte du boîtier métallique (1) et soudée avec le boîtier métallique (1).

6. La pile bouton selon la revendication 5, dans laquelle le rapport entre le diamètre du boîtier métallique (1) et la hauteur du boîtier métallique (1) est supérieur à 1.

7. La pile bouton selon la revendication 1, dans laquelle la cellule (2) comprend un séparateur (23) configuré comme une poche sac ; la cathode (21) ou l'anode (22) est enveloppée dans le séparateur (23) ; une pluralité de cathodes (21) sont connectées en parallèle pour former un collecteur de courant positif ; une pluralité d'anodes (22) sont connectées en parallèle pour former un collecteur de courant négatif.

8. La pile bouton selon la revendication 7, dans laquelle le séparateur (23) est une feuille de plastique poreux ayant des propriétés d'isolation électrique et capable de conduire les ions.

9. La pile bouton selon la revendication 7, dans laquelle la cellule (2) a une structure empilée dans laquelle la cathode (21), le séparateur (23) et l'anode (22) sont empilés en continu dans un ordre séquentiel.

10. La pile bouton selon la revendication 7, dans laquelle la cellule (2) a une structure d'enroulement formée par la superposition et l'enroulement de la cathode (21), du séparateur (23) et de l'anode (22).

11. La pile bouton selon la revendication 10, dans laquelle une languette de cathode (24) est dirigée vers la face frontale d'une première surface d'extrémité de la structure d'enroulement, et une languette d'anode (25) est dirigée vers la face frontale d'une seconde surface d'extrémité de la structure d'enroulement ; la languette de cathode (24) et la languette d'anode (25) sont respectivement fixées à la première surface d'extrémité ou à la deuxième surface d'extrémité de la structure d'enroulement à travers un film isolant (7) ; la languette de cathode (24) est électriquement connectée à la cathode (21), et la languette d'anode (25) est électriquement connectée à l'anode (22).

12. La pile bouton selon la revendication 11, dans laquelle la languette de cathode (24) et la languette d'anode (25) sont respectivement disposées au milieu de la première surface d'extrémité ou de la deuxième surface d'extrémité de la cellule (2) correspondante, ou sont respectivement disposées à une partie arrière de la première surface d'extrémité ou de la deuxième surface d'extrémité de la cellule (2).

13. La pile bouton selon la revendication 12, dans laquelle la languette de cathode (24) et la languette d'anode (25) respectivement disposées au milieu de la première surface d'extrémité ou de la deuxième surface d'extrémité de la cellule (2) sont capables d'être pliées avec un angle de 90° vers la partie arrière d'une surface d'extrémité de la cellule (2) et peuvent être fixés à une surface d'extrémité correspondante ; la languette de cathode (24) et la languette d'anode (25) disposées sur une partie arrière de la première surface d'extrémité ou de la seconde surface d'extrémité de la cellule (2) peuvent être pliées avec un angle de 90° vers la direction du milieu d'une surface d'extrémité de la cellule (2) et attachées à une surface d'extrémité correspondante.
